Europäisches Patentamt

**European Patent Office**

Office européen des brevets

(11) Numéro de publication: **0 017 584**
A1

## (12) DEMANDE DE BREVET EUROPEEN

(21) Numéro de dépôt: **80400439.8**

(22) Date de dépôt: **02.04.80**

(51) Int. Cl.³: **G 06 F 13/00**
//G06F11/00

(30) Priorité: **06.04.79 FR 7908715**

(43) Date de publication de la demande:
**15.10.80 Bulletin 80/21**

(84) Etats Contractants Désignés:
**DE GB IT**

(71) Demandeur: **COMPAGNIE INTERNATIONALE POUR L'INFORMATIQUE CII-HONEYWELL BULL (dite CII-HB)**
**94, avenue Gambetta**
**F-75020 Paris(FR)**

(72) Inventeur: **Bavoux, Robert Jules Adolphe**
**11, avenue Otis Mygatt**
**F-92500 Rueil Malmaison(FR)**

(72) Inventeur: **Lemaire, Francis René Jean-Marie**
**9, rue du Bois**
**F-78370 Plaisir(FR)**

(72) Inventeur: **Salkazanov, Pierre**
**3, rue des Ebisoires**
**F-78370 Plaisir(FR)**

(54) Procédé et système d'exploitation d'une mémoire adressable permettant d'associer à volonté des qualificatifs aux données contenues dans la mémoire.

(57) L'invention concerne les systèmes d'exploitation de données faisant appel à une mémoire adressable 24. Elle propose un procédé et un système d'exploitation permettant d'associer des qualificatifs aux données contenues dans la mémoire par inscription de ces qualificatifs dans des emplacements 25 associés aux données et réservés à cet usage.

EP 0 017 584 A1

./...

Figure 3

- 1 -

"PROCEDE ET SYSTEME D'EXPLOITATION D'UNE MEMOIRE ADRESSABLE PERMETTANT D'ASSOCIER A VOLONTE DES QUALIFICATIFS AUX DONNEES CONTENUES DANS LA MEMOIRE"

L'invention concerne les dispositifs de mémorisation de données adressables utilisés dans les systèmes de traitement de données et a essentiellement pour objet un procédé et un système d'exploitation par des moyens utilisateurs d'une mémoire adressable permettant de qualifier les données de la mémoire par association de qualificatifs aux données.

Le système selon l'invention permet avantageusement, lors des essais de mise au point ou de dépannage d'un système de traitement de données utilisant une mémoire adressable, d'associer aux données des qualificatifs caractéristiques des données ou caractéristiques du traitement subi par les données. Ces qualificatifs permettent aux dispositifs utilisateurs de connaître à tout moment un caractère particulier des données.

Cette invention s'applique notamment aux systèmes de traitement de données faisant appel aux microprocesseurs et dans lesquels on doit effectuer des opérations de contrôle et de test sur les données comme c'est le cas pendant les périodes de mise au point et de maintenance.

Elle s'applique également aux automates industriels ou autres, quand, par exemple, l'exécution de certaines

- 2 -

opérations est accompagnée de l'enregistrement de paramètres relatifs à cette exécution comme par exemple, le franchissement de la limite d'une tolérance. La lecture de ces paramètres en cours d'opération périodique de contrôle permet de connaître la dérive des réglages par une opération de lecture du contenu des qualificatifs.

Dans un système de traitement de données l'unité de traitement puise les données au fur et à mesure de ses besoins dans une mémoire de données. En particulier, c'est là qu'elle vient chercher les instructions du programme en cours d'exécution. Pendant les périodes de mise au point et de maintenance on effectue le contrôle et le test des différentes instructions constituant le programme en cours de mise au point ou de test. Par exemple, pour être certain en fin d'opération de l'exhaustivité des tests effectués il faut s'assurer que toutes les instructions ont été contrôlées et testées. Il n'existe pas actuellement de moyen simple pour obtenir cette certitude. Un des moyens possible est l'enregistrement dans une mémoire de toutes les adresses appelées. Cette méthode nécessite des emplacements mémoire supplémentaires et au dépouillement un traitement laborieux car les instructions consécutives n'étant pas nécessairement situées à des adresses également consécutives il faut opérer un tri préalable avant d'effectuer le contrôle.

Pour pallier les inconvénients précités, l'invention propose un procédé et un dispositif consistant à associer à chaque donnée contenue dans la mémoire des données un qualificateur contrôlé par l'unité de traitement et dont le rôle est de permettre à l'unité de traitement de connaître à volonté la caractéristique d'une donnée par lecture de ce qualificatif associé.

A cet effet, l'invention a pour objet un procédé pour exploiter par des moyens utilisateurs des données contenues dans une mémoire adressable du type consistant à associer des qualificatifs auxdites données contenues dans ladite mémoire adressable et à utiliser ladite mémoire adressable en, notamment, appelant desdits moyens utilisateurs lesdites données caractérisées en ce que ladite qualification associée aux données comprend l'écriture de qualificateurs dans des moyens de qualification associés auxdites données, lesdits qualificateurs provenant desdits moyens utilisateurs, et en ce que ladite utilisation de la mémoire adressable comprend la commande desdits moyens de qualification à chaque fois qu'une donnée est appelée pour engendrer une information relative audit qualificateur associé à ladite donnée appelée et pour transmettre cette dite information auxdits moyens utilisateurs.

Suivant une autre caractéristique du procédé de l'invention, lesdits qualificateurs ont des configurations différentes, lesquelles dites configurations différentes sont définies par les moyens utilisateurs.

Suivant une autre caractéristique du procédé de l'invention la qualification précitée comporte une étape intermédiaire avant ladite écriture dans lesdits moyens de qualification, dans cette dite étape intermédiaire lesdits moyens utilisateurs transmettent ledit qualificateur à des moyens intermédiaires qui à

- 4 -

leur tour transmettent ledit qualificateur pour écriture dans lesdits moyens de qualification et ladite utilisation de ladite mémoire adressable comporte la stimulation des moyens intermédiaires pour la transmission auxdits moyens utilisateurs de ladite information relative audit qualificateur.

Suivant une autre caractéristique du procédé de l'invention ladite transmission de ladite information relative audit qualificateur comprend une première phase de notification aux moyens utilisateurs de la présence du qualificateur dans lesdits moyens de qualification et une deuxième phase dans laquelle ledit qualificateur est transmis à son tour à la demande desdits moyens utilisateurs qui ont été alertés au cours de ladite première phase.

L'invention vise également un système d'exploitation de données pour l'exécution du procédé répondant aux caractéristiques sus-mentionnées et du type comprenant :

- au moins une mémoire de données adressable pour emmagasiner des données,
- des moyens utilisateurs de données pour exploiter lesdites données, ces dits moyens utilisateurs comprenant :
  . des circuits de traitement pour traiter lesdites données,
  . des circuits d'adressage pour adresser les emplacements d'emmagasinage desdites données dans ladite mémoire des données sur commande desdits circuits de traitement,
  . un registre tampon d'entrée-sortie relié auxdits

0017584

- 5 -

circuits de traitement pour contenir lesdites données faisant l'objet d'un échange entre lesdits circuits de traitement et ladite mémoire adressable.

- ledit système d'exploitation de données comporte en outre des moyens de liaison comprenant : . un omnibus d'adresse pour raccorder lesdits circuits d'adressage avec ladite mémoire de données,
. un omnibus de données pour raccorder ledit registre tampon d'entrée-sortie avec ladite mémoire des données,
. un omnibus de contrôle pour contrôler les échanges de données entre lesdits circuits de traitement et ladite mémoire adressable.

Ce système d'exploitation est caractérisé en ce qu'il comporte des moyens de qualification desdites données contenues dans ladite mémoire adressable des données pour qualifier lesdites données sur instruction desdits moyens de traitement par écriture d'un qualificateur dans des emplacements associés aux adresses contenant lesdites données, lesquels emplacements associés répondent aux appels desdites adresses particulières par lesdits circuits de traitement par l'envoi d'informations relatives auxdits qualificateurs vers lesdits circuits de traitement.

L'invention vise également un système d'exploitation caractérisé en ce qu'il comporte des moyens intermédiaires placés entre lesdits circuits de traitement et lesdits moyens de qualification pour contrôler les échanges desdites informations relatives auxdits qualificateurs entre lesdits circuits de traitement et lesdits moyens de qualification pour permettre auxdits circuits de traitement de différer

- 6 -

l'exploitation des qualificateurs.indicateurs.

Selon une autre caractéristique de l'invention, lesdits moyens intermédiaires disposent d'un moyen de contrôle pour faire connaître auxdits circuits de traitement qu'ils viennent de faire appel à une desdites données comportant un qualificatif associé.

Selon une autre caractéristique de l'invention, lesdits emplacements associés sont contenus dans une mémoire des qualificateurs qui est une mémoire analogue à ladite mémoire de données dont l'adressage est assuré par lesdits circuits d'adressage desdits moyens d'utilisation.

Selon une autre caractéristique de l'invention, ledit dispositif intermédiaire est constitué d'un dispositif adressable du type utilisé pour raccorder lesdits moyens de traitement avec des dispositifs périphériques avec lesquels ils échangent des données.

L'invention vise bien entendu les plaquettes de circuits intégrés, modules ou analogues équipés d'un système logique répondant aux caractéristiques précédentes.

D'autres objets, caractéristiques et avantages de la présente invention ressortiront mieux de l'exposé qui suit, fait en référence aux dessins annexés à ce texte, qui représentent des modes de réalisation préférés de l'invention.

La figure 1 représente l'organigramme des opérations qui se déroulent dans un système de traitement de données utilisant le procédé de l'invention.

La figure 2 est une représentation schématique d'un dispositif permettant l'application du procédé décrit sur la figure précédente.

La figure 3 est une représentation schématique d'une variante du dispositif représenté sur la figure 2.

La figure 4 représente schématiquement un exemple de réalisation de la variante de la figure 3 autour d'un microprocesseur MOTOROLA MC 6800.

La figure 5 représente le détail des circuits de la mémoire des qualificateurs et des circuits associés du dispositif de la figure 4.

La figure 6 représente le détail du contrôleur d'unification d'écriture de la figure 5.

La figure 7 représente le chronogramme des signaux électriques mis en oeuvre dans le fonctionnement des circuits précédents dans le cas d'une écriture en mémoire des qualificateurs.

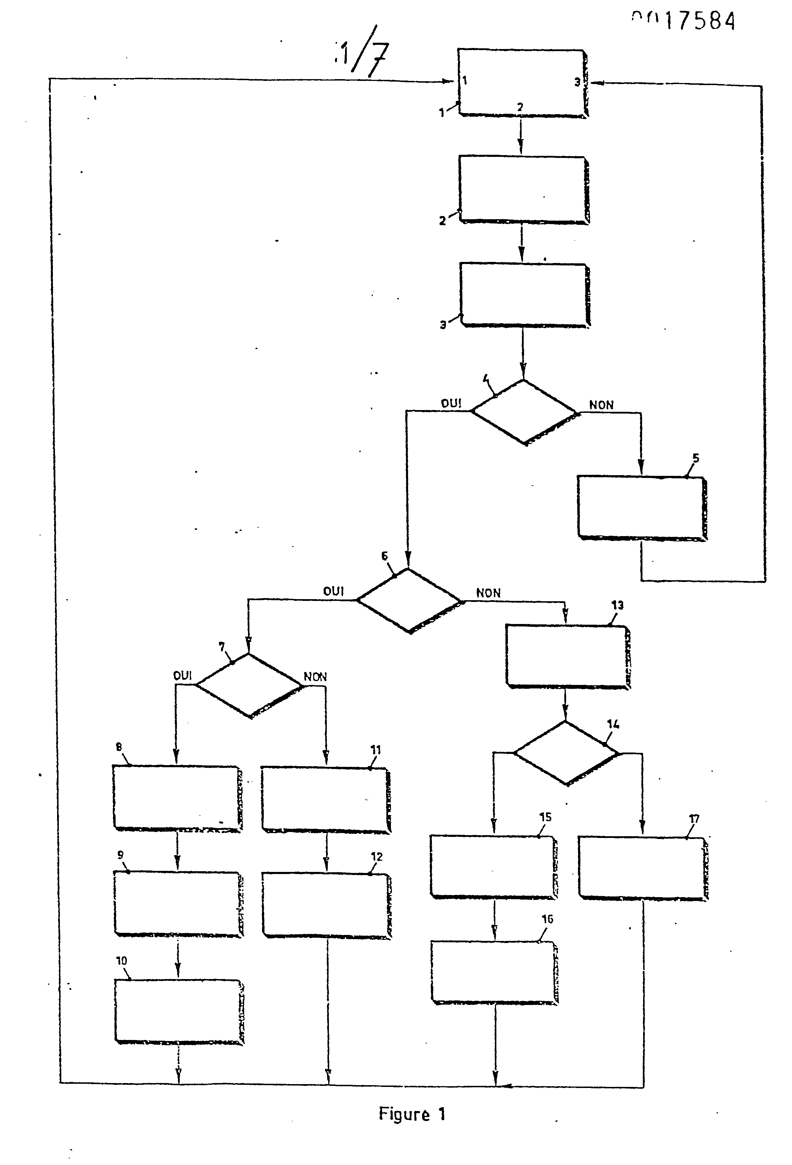

Pour illustrer le procédé faisant l'objet de l'invention, la figure 1 représente l'organigramme des opérations qui se déroulent dans un système de traitement de données utilisant ledit procédé.

Pour la clarté de l'exposé, il est fait l'hypothèse que cet organigramme concerne le fonctionnement d'un système de traitement de données comportant, entre autres, un microprocesseur et des circuits associés tels qu'on les trouve décrits, par exemple, dans le document édité par la Société "MOTOROLA" au mois de Février 1976, référencé 9701-5 (IMPERIAL LITHO B 55769) et intitulé M6800 MICROCOMPUTER SYSTEM DESIGN DATA. Au cours de son fonctionnement, le microprocesseur doit obtenir des instructions contenues dans une mémoire adressable que l'on appellera mémoire des données. L'adresse des instructions à obtenir est contenue dans un compteur ordinal ou compteur d'instruction. Cette adresse est communiquée à la mémoire adressable qui en retour, sur demande d'un cycle lecture, transmettra le contenu de l'adresse ainsi appelée. Les instructions ainsi recueillies sont placés dans un registre instruction. A partir de ce registre, les instructions sont décodifiées pour en déduire les opérations nécessaires à leur exécution par les circuits de traitement. Réciproquement le microprocesseur peut emmagasiner des instructions ou des données dans la mémoire adressable en appelant l'adresse de stockage, en transmettant les instructions ou données à enregistrer et en demandant un cycle d'inscription ou écriture en mémoire. Quand une instruction a été obtenue le microprocesseur commande la progression du compteur ordinal : le contenu du compteur est alors l'adresse de la prochaine instruction.

Sur la figure 1, on a représenté par le bloc (1) l'opération de définition de l'adresse de la prochaine instruction. Par les bornes (1) ou (3) du bloc (1) arrive l'autorisation d'entreprendre cette définition. Quand cette adresse est définie le système effectue l'acquisition de l'instruction contenue à cette adresse. Cette acquisition est représentée par le bloc (2). Cette opération est suivie de l'opération de

0017584

- 9 -

décodification de l'instruction qui est représentée par le bloc (3). Cette décodification permet au système de connaître la nature des opérations définies par l'instruction. Il est ainsi possible de connaître si ces opérations réclament un cycle de la mémoire des données. Si l'instruction ne fait pas appel à la mémoire, elle est exécutée en (5) et en fin d'exécution l'ordre est donné ·au programme de passer à l'instruction suivante par un signal de fin d'exécution appliqué sur l'entrée 3 du bloc (1).

Si l'instruction fait appel à la mémoire, il est examiné en (6) si le cycle mémoire demandé est un cycle lecture ou un cycle écriture.

S'il s'agit d'un cycle écriture, le système détermine en (7) si l'adresse appelée doit être affectée d'un qualificateur associé à la donnée contenue à cette adresse. Dans l'affirmative, le système fait l'acquisition en (8) de la configuration du qualificateur associé. Ensuite, le système fait l'acquisition en (9) de la donnée à emmaganiser dans la mémoire. Finalement, en (10) le système effectue d'une part le chargement du qualificateur associé dans la mémoire des qualificateurs, d'autre part, le chargement de la donnée dans la mémoire des données. Ces deux opérations de chargement étant terminées, le système stimule par l'entrée 1 du bloc (1) la progression du programme.

Si le cycle écriture ne comporte pas de qualificateur associé à la donnée à emmagasiner, le système effectue en (11) l'acquisition de la donnée à mémoriser, en (12) il effectue le chargement de la donnée dans la mémoire des données puis relance la progression du programme par la borne 1 du bloc (1).

Si le cycle demandé à la mémoire est un cycle de lecture, le système effectuera ce cycle en (13). Le résultat de ce cycle est examiné en (14).

Si le cycle a donné comme résultat une donnée et que l'adresse où a été trouvée cette donnée comporte un qualificateur associé, ce qualificateur est examiné en (15). Ce qualificateur caractérise l'adresse lue et le microprocesseur effectue le traitement correspondant en (16). La fin de ce traitement relance par l'entrée (1) du bloc (1) le déroulement du programme.

Dans le cas où le cycle de lecture n'a pas révélé la présence d'un qualificateur, la donnée obtenue est exploitée en (17) conformément à l'instruction chargée en (2). Une fois cette opération terminée, le contrôle est rendu au programme par sollicitation de l'entrée 1 du bloc (1).

En résumé, on peut dire que la mémoire des données contient des données qualifiées par des qualificateurs. Cette qualification est obtenue à l'écriture en associant aux adresses concernées un qualificateur associé. A la lecture d'une adresse contenant une donnée qualifiée, l'appel de cette adresse fait apparaître le qualificateur associé aux données contenues à cette adresse. Ce qualificateur fournit au système une information concernant les données auxquelles le qualificateur est associé. Ce qualificateur peut contenir, par exemple, l'indication d'un traitement effectué sur cette donnée.

- 11 -

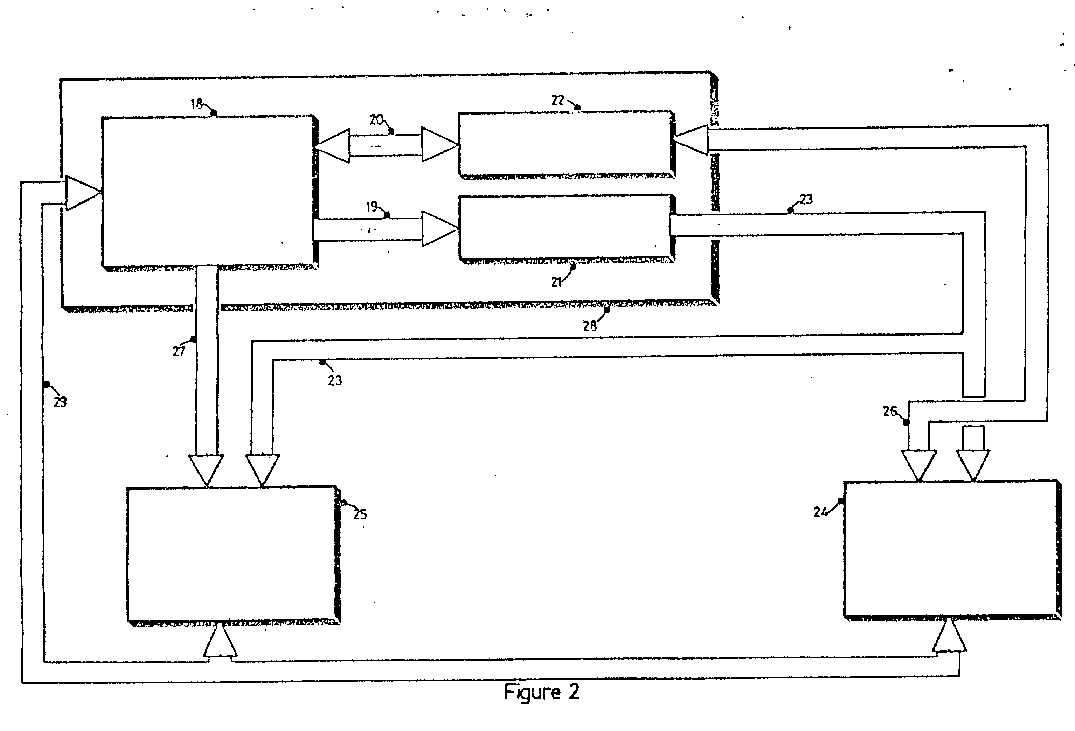

Sur la figure 2 est représenté un système d'exploitation de données faisant application du procédé qui vient d'être décrit. Le système d'exploitation est représenté sous forme de blocs fonctionnels. Le bloc fonctionnel (28) représente les moyens utilisateurs de données. A l'intérieur de ce bloc sont représentés :

. en (18) les circuits de traitement de données,
. en (21) les circuits d'adressage,
. en (22) le registre tampon d'entrée-sortie.

Les circuits de traitement de données (18) sont reliés par une liaison (19) aux circuits d'adressage (21), par une liaison (20) au registre tampon d'entrée-sortie (22), par une liaison (27) aux moyens (25) de qualification et par une liaison (29) à la mémoire (24) des données et aux moyens (25) de qualification. La liaison (27) est l'omnibus des qualificateurs et la liaison (29) est l'omnibus de contrôle. La sortie des circuits (21) d'adressage alimente l'omnibus (23) d'adressage. La sortie du registre tampon (22) alimente l'omnibus (26) des données. L'omnibus (23) d'adressage est raccordé à la mémoire (24) des données et aux moyens (25) de qualification. La mémoire (24) des données possède donc trois entrées attaquées respectivement par l'omnibus (23) des adresses, l'omnibus (29) de contrôle et l'omnibus (26) des données. Les moyens (25) de qualification possèdent également 3 entrées attaquées respectivement par l'omnibus (23) des adresses l'omnibus, (29) de contrôle et l'omnibus (27) des qualificateurs.

Quand les circuits (18) de traitement veulent échanger des données avec les mémoires (24) des données et un qualificateur avec les moyens (25) de qualification, ils placent l'adresse de l'emplacement, où se trouvent les données et le qualificateur précité, sur la liaison (19) qui alimente le circuit (19) d'adressage, ces derniers alimentent l'omnibus (23) d'adressage qui vient d'une part adresser un emplacement dans la mémoire (24) des données et d'autre part, adresser un emplacement dans les moyens (25) de qualification, on voit que l'adresse de deux emplacements est la même adresse dans ces deux dispositifs. Il suffit pour les moyens de qualification d'avoir un emplacement disponible pour chacune des données à qualifier afin d'y inscrire le qualificateur correspondant. Par ailleurs, les circuits (18) de traitement placent sur l'omnibus (29) de contrôle les signaux définissant la nature du cycle de fonctionnement demandés aux mémoires (24) et (25). Si les circuits (18) de traitement désirent obtenir un cycle d'écriture, ils doivent avant de commencer ce cycle d'écriture, d'une part, placer la donnée à emmagasiner sur la liaison (20) qui vient charger le registre tampon (22) des données et d'autre part, s'il s'agit d'une donnée à qualifier, placer le qualificateur correspondant à cette adresse sur l'omnibus (27) des qualificateurs. Ces opérations terminées, les circuits (18) de traitement lancent le cycle écriture qui introduit respectivement la donnée placée sur l'omnibus (26) de données dans la mémoire (24) de données et le qualificateur placé sur l'omnibus (27) des qualificateurs dans les moyens (25) de qualification.

- 13 -

On voit donc de ce qui vient d'être décrit, que les circuits (18) de traitement peuvent, au cours d'un cycle écriture, charger en mémoire (24) des données une donnée et, si cette donnée est à qualifier, charger les moyens (25) de qualification avec le qualificateur correspondant à cette donnée. Ce qualificateur sera appelé par la suite qualificateur associé à l'adresse qualifiée.

Dans le cas d'un cycle de lecture les opérations d'adressage sont les mêmes que ci-dessus mais sur l'omnibus de contrôle les circuits (18) de traitement commande un cycle de lecture. Les circuits (18) de traitement lancent alors un cycle de lecture. Ce cycle de lecture place à la sortie de la mémoire (24) des données, par conséquent sur l'omnibus (26) des données, la donnée qui est contenue dans l'emplacemnt adressé. L'omnibus (26) des données transmet cette donnée lue au registre tampon (22) d'entrée-sortie qui à son tour, à travers la liaison (20), transmet cette donnée au circuit (18) de traitement.

Parallèlement, un cycle de lecture a également été exécuté dans les moyens (25) de qualification. Si dans l'emplacement adressé, qui se trouve donc à une adresse associée à celle de la donnée, se trouve un qualificateur, ce qui prouve qu'il s'agit d'une adresse contenant une donnée qualifiée, ce qualificateur est placé à la sortie des moyens (25) de qualification et du même coup, transmis par l'omnibus (27) aux circuits (18) de traitement. Si la lecture de cette adresse des moyens (25) de qualification ne fournit pas de qualificateur cela signifie que cette adresse ne contient pas une donnée qualifiée et aucun signal n'est fourni à l'omnibus (27) des qualificateurs.

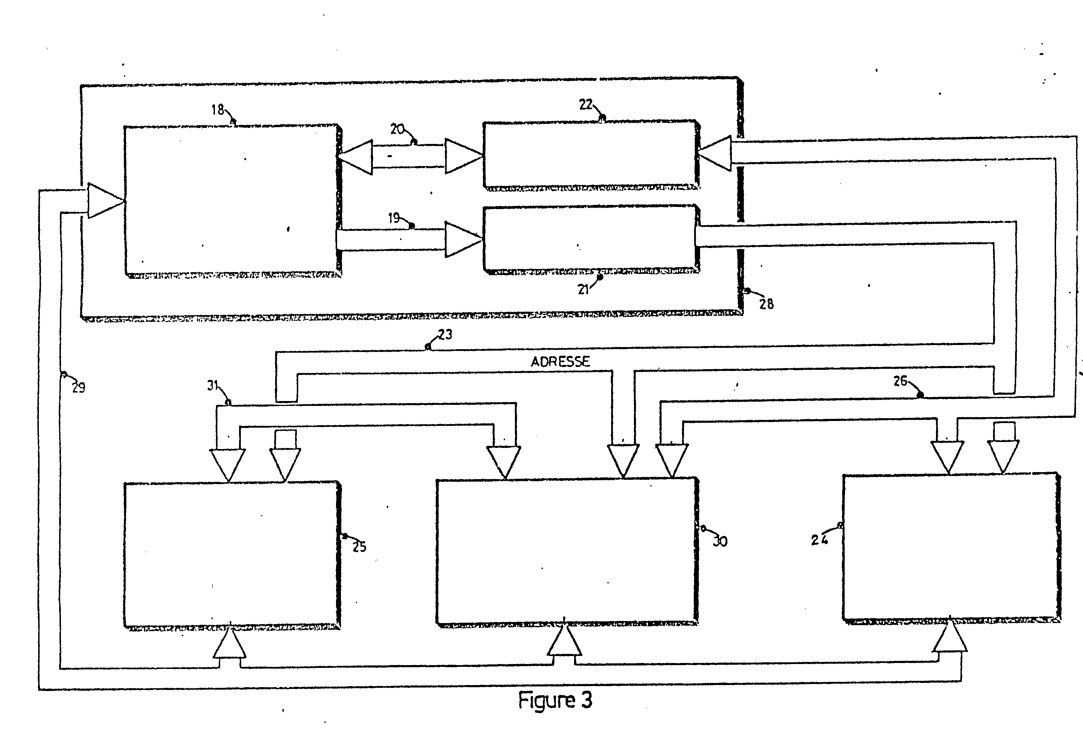

Sur la figure 3 est représentée une variante du système représenté sur la figure 2. Dans cette variante des moyens (30) intermédiaires ont été interposés entre les moyens (28) utilisateurs et les moyens (25) de qualification. La transmission des qualificateurs ne se fait plus directement à travers un omnibus (27) des qualificateurs. Les moyens (25) de qualification sont reliés à l'omnibus (23) d'adresse, à l'omnibus (29) de contrôle et à l'omnibus (31) des qualificateurs différés. L'omnibus (31) des qualificateurs différés est relié à son autre extrémité aux moyens (30) intermédiaires. Ces moyens (30) intermédiaires reçoivent également l'omnibus (23) d'adresse et l'omnibus (26) des données.

Quand les dispositifs (28) utilisateurs veulent écrire une donnée dans la mémoire (24) des données en associant à ces données à écrire un qualificateur, ils procèdent de la façon suivante. Ils placent, sur l'omnibus (23) d'adresses, l'adresse des moyens (30) intermédiaires, ils placent sur l'omnibus (26) des données le qualificateur associe aux données à écrire à l'adresse associée et sur l'omnibus (29) de contrôle l'ordre d'exécuter un cycle d'écriture. Cet ensemble de signaux appliqués sur les moyens (30) intermédiaires va provoquer l'introduction du qualificateur dans les moyens (30) intermédiaires. Au cycle suivant les moyens (28) utilisateurs placent l'adresse de la donnée à écrire en mémoire (24) des données sur l'omnibus (23) d'adresses, la donnée à écrire en mémoire (24) des données sur l'omnibus (26) des données, l'ordre d'exécuter un cycle d'écriture sur l'omnibus (29) de contrôle. Cet ensemble de signaux appliqués sur la mémoire (24) des données et sur les moyens (25) de qualification va provoquer sur ces 2 organes (24) et (25) l'exécution d'un cycle écriture. Pour la mémoire (24) des données ce cycle écriture va emmagasiner la donnée placée sur l'omnibus (26) des données dans l'emplacement de la mémoire (24) des données définies par l'adresse placée sur l'omnibus (23) des adresses. Pour les moyens (30) intermédiaires cette commande de cycle écriture va placer le qualificateur reçu précédemment sur l'omnibus (31) des qualificateurs différés. Pour les moyens (25) de qualification, ce cycle écriture provoque l'emmagasinage du qualificateur placé sur l'omnibus (31) des qualificateurs différés dans l'emplacement des moyens (25) de qualification défini par l'adresse placée sur l'omnibus (23) des adresses.

Quand les moyens (28) utilisateurs veulent lire le contenu d'un emplacement de la mémoire (24) des données ils placent sur l'omnibus (23) des adresses, l'adresse de l'emplacement à lire et sur l'omnibus (29) de contrôle ils commandent un cycle de lecture. L'arrivée des signaux portés par ces 2 omnibus sur la mémoire (24) des données déclenche l'exécution du cycle lecture de la mémoire (24) des données. Ce cycle de lecture place la donnée contenue dans l'emplacement désigné par l'adresse placée sur l'omnibus (23) des adresses sur l'omnibus (26) des données. Dans le même temps les moyens (25) de qualification reçoivent par l'omnibus (23) des adresses, l'adresse de l'emplacement lu dans la mémoire des données et par l'omnibus (29) de contrôle une commande de lecture et exécutent un cycle de lecture du contenu de l'emplacement de moyens (25) de qualification ayant la même adresse que celle appelée dans la mémoire (24) des données. S'il existe un qualificateur emmagasiné dans cet emplacement, le cycle de lecture place cet qualificateur sur l'omnibus (31) des qualificateurs différés. Cet omnibus (31) des qualificateurs différés transmet ce qualificateur aux moyens (30) intermédiaires. Pour savoir si l'adresse appelée comporte un qualificateur associé, les moyens (28) d'exploitation demandent, par une commande appropriée placée sur l'omnibus (29) de contrôle, aux moyens (30) intermédiaires de placer sur l'omnibus (26) des données le résultat de la lecture effectuée à l'adresse appelée dans les moyens (25) de qualification. S'il n'y a pas de qualificateur associé aucun signal sera transmis sur l'omnibus (26) de données. S'il y a un qualificateur associé, ce qualificateur sera placé sur l'omnibus (26) de données.

Suivant une variante du système d'exploitation qui vient d'être décrit, les moyens (25) de qualification après une opération de lecture du contenu d'un emplacement défini par une adresse, avertissent les moyens (28) utilisateurs en cas de détection de la présence d'un qualificateur associé aux données contenues à l'adresse appelée. Pour cela, ils placent sur l'omnibus (29) de contrôle un signal informant les moyens (28) utilisateurs de l'existence d'un qualificateur associé à la donnée appelée. Cette information des moyens (28) utilisateurs de l'existence de cet qualificateur évite d'avoir à demander un cycle spécial aux moyens (30) intermédiaires.

Suivant une autre variante du système d'exploitation les moyens (25) de qualification sont constitués d'une

- 17 -

mémoire analogue à la mémoire (24) des données. Cette mémoire est appelée mémoire (25) des qualificateurs en raison de sa ressemblance avec la mémoire (24) de données.

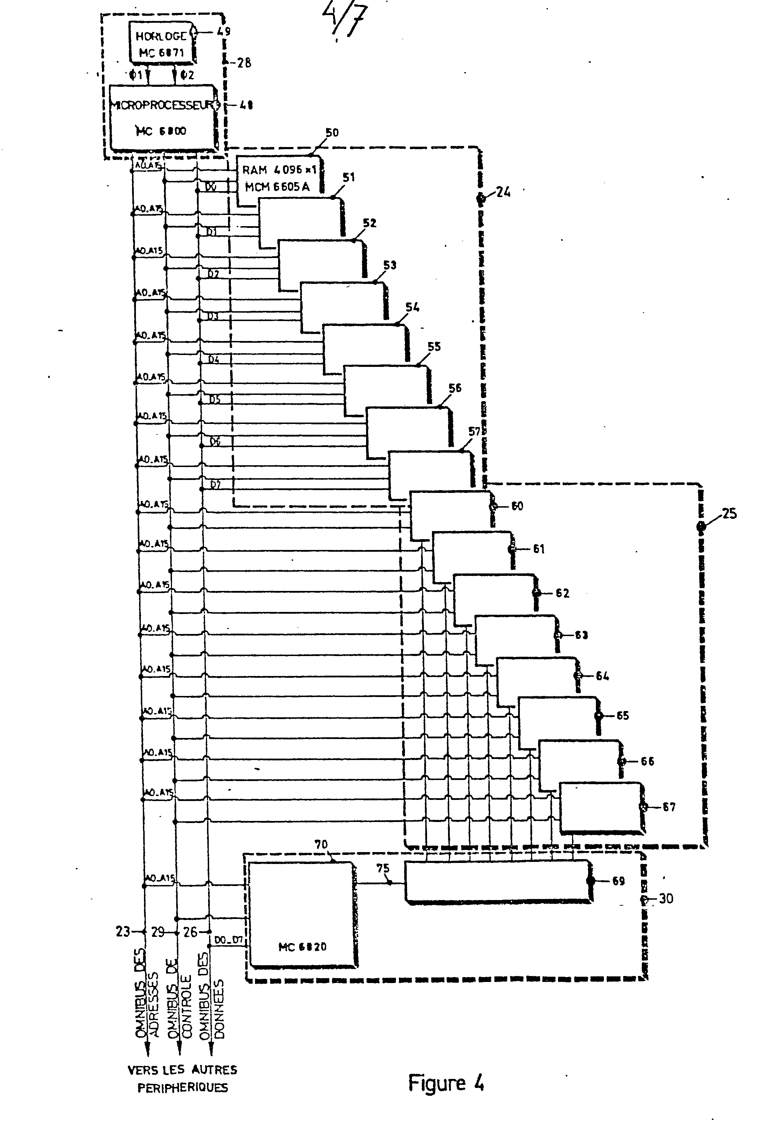

Suivant une autre variante du système d'exploitation, les moyens (30) intermédiaires sont constitués d'un dispositif adressable analogue à ceux utilisés pour raccorder les moyens utilisateurs (28) de données avec des moyens périphériques : les moyens (30) intermédiaires sont considérés par les moyens (28) utilisateurs comme un moyen périphérique particulier. Le système et ses variantes seront mieux compris avec l'aide de la figure 4 qui représente un mode de réalisation préféré de l'invention réalisé autour d'un microprocesseur MOTOROLA MC 6800.

Les moyens (28) d'utilisation sont constitués d'une horloge (49) du type MOTOROLA MC 6871 et d'un microprocesseur (48) du type MOTOROLA MC 6800.

L'horloge (49) MC 6871 produit deux signaux de synchronisation qui définissent les phases de fonctionnement de l'ensemble du système. Ces deux signaux sont respectivement appelés $\phi_1$ et $\phi_2$. Ces signaux sont transmis au microprocesseur (48).

Le microprocesseur (48) est relié au reste du système qu'il contrôle au moyen de trois omnibus :

- un omnibus (23) d'adresse qui véhicule l'adresse appelée par le microprocesseur (48). Il comprend 16 lignes représentant chacune un des poids binaires définissant l'adresse. Ces lignes sont référencées dans les explications qui suivent par $A_0$, $A_1$, $A_2$, $A_3$, $A_4$,..........., $A_{14}$, $A_{15}$.

- un omnibus (26) des données qui assure l'échange des données entre le microprocesseur (48) et les différents circuits qu'il contrôle. Il comprend 8 lignes représentant chacune un des poids binaires définissant la donnée faisant l'objet de l'échange. Ces lignes sont référencées par $D_0$, $D_1$, $D_2$, $D_3$, $D_4$, $D_5$, $D_6$, $D_7$.

- un omnibus (29) de contrôle permet au microprocesseur (48) d'émettre des ordres vers les circuits contrôlés et de recevoir les réponses de ceux-ci. Il comprend les lignes transportant les signaux suivants :

. les signaux d'horloge $\phi_1$ et $\phi_2$.

. le signal d'initialisation, qui sera référencé par INITIALIS, et qui sert à remettre les circuits dans un état initial.

. le signal de commande de cycle écriture, qui sera référencé par ECRITURE et qui quand il est à un niveau haut, commande l'exécution du cycle écriture alors que quand il sera à un niveau bas, commande l'exécution d'un cycle lecture.

. le signal de validation de l'adresse placée sur l'omnibus (23) des adresses qui est référencé par SELECTION.

. le signal de masquage des interruptions qui ne sera pas utilisé dans les descriptions qui vont suivre.

. le signal de demande d'interruption référencé par INTERRUPT, qui est produit par les circuits contrôlés quand ceux-ci réclament une intervention du microprocesseur (48).

- 19 -

Le document technique MOTOROLA cité plus haut donne tous les détails concernant ces signaux et leur utilisation.

La mémoire (24) des données est constituée de 8 circuits intégrés MOTOROLA du type MCM 6605A. Ces circuits sont représentés en (50), (51), (52), (53), (54), (55), (56), (57). Chacun de ces circuits intégrés est une mémoire adressable comprenant 4096 emplacements d'une capacité de 1 bit. Le circuit (50) emmagasine les bits 0 des données, le circuit (51) emmagasine le bit 1 ainsi de suite jusqu'au circuit intégré (57) qui emmagasine le bit 7.

La mémoire (25) des qualificateurs est analogue à la mémoire (24) des données. On y retrouve 8 circuits intégrés référencés (60), (61), (62), (63), (64), (65), (67). Le circuit intégré (60) emmagasine les bits 0 des qualificateurs ainsi de suite jusqu'au circuit intégré (67) qui emmagasine le bit 7 des qualificateurs.

Les emplacements de ces deux mémoires (24) et (25) sont adressés au moyen de l'omnibus (23) d'adresse.

La mémoire (24) des données échange les données qu'elle stocke avec le microprocesseur à travers l'omnibus (26) des données : le circuit (50) échange le bit 0 par le fil $D_0$, le circuit (51) échange le bit 1 par le fil $D_1$, ainsi de suite jusqu'au circuit (57) qui le fait par le fil $D_7$.

La mémoire (25) des qualificateurs échange les bits de qualification avec le microprocesseur (48) à travers les moyens (30) intermédiaires qui jouent, en quelque

- 20 -

sorte, un rôle de relais. Ces moyens (30) intermédiaires comprennent un unificateur (69) d'écriture des qualificateurs, un adapteur (70) d'interface. L'adaptateur (70) d'interface est un circuit intégré MOTOROLA du type MC 6820. Ce circuit peut supporter la connexion de 2 périphériques. Dans le système représenté sur la figure 4, il est fait usage d'une seule de ces 2 possibilités de connexion. La possibilité de connexion utilisée est employée tantôt en mode lecture tantôt en mode écriture suivant les commandes du microprocesseur. Bien entendu, il est parfaitement possible d'utiliser les 2 possibilités de connexions et dans ce cas chacune des possibilités de connexion est réservée à un mode de fonctionnement : une des possibilités est réservée au mode écriture, l'autre possibilité est réservée au mode lecture.

Le fonctionnement des circuits intégrés (50 à 57), (60 à 67) et (70) est décrit dans la documentation du constructeur. Le fonctionnement de l'unificateur (69) d'écriture est expliqué ci-après.

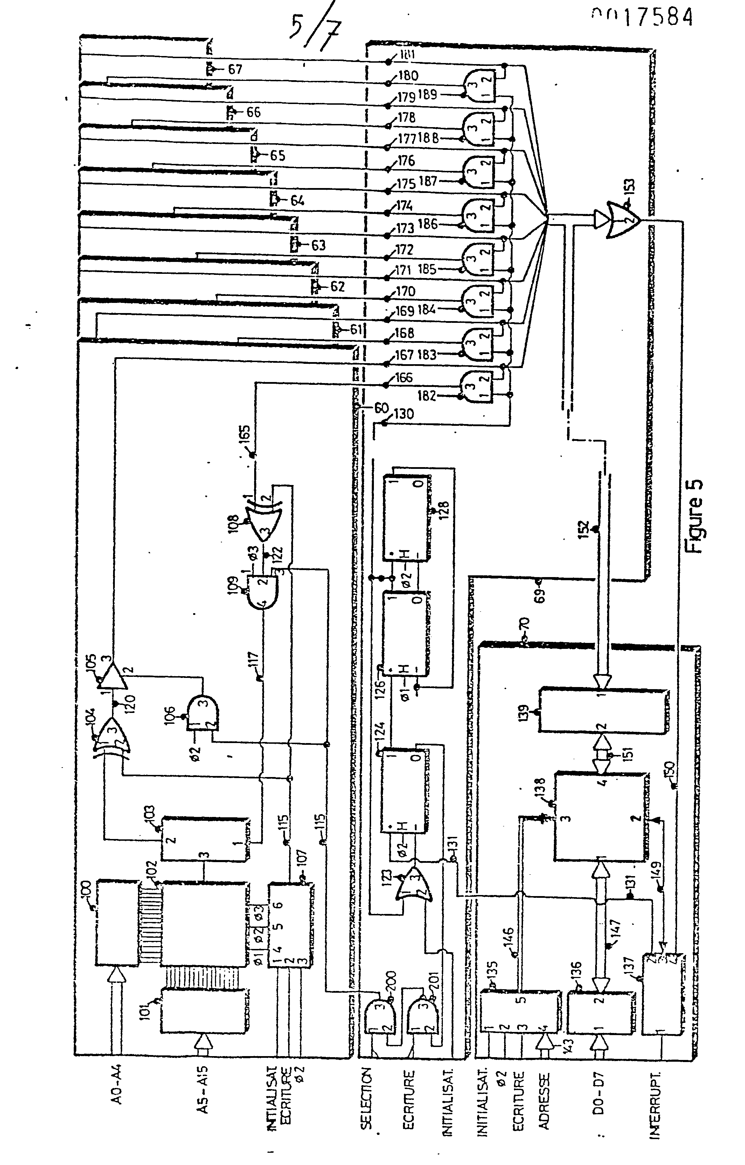

La figure 5 est destinée à illustrer le fonctionnement de l'unificateur (69) d'écriture. Sur cette figure sont donc représentés exclusivement les circuits directement impliqués par le fonctionnement de cet unificateur (69) à savoir :

. les 8 circuits intégrés (60, 61, 62, 63, 64, 65, 66, 67) constituant la mémoire (25) des qualificateurs.
. le circuit intégré (70) qui est le circuit adaptateur d'interface,
. le contrôleur (69) d'écriture des qualificateurs,
. les omnibus ne sont pas représentés mais les lignes utilisées sont désignées par leur appellation mnémonique : $A_0$....., $A_{15}$ pour les lignes de l'omnibus (23) d'adresse, $D_0$, ..., $D_7$ pour les lignes de l'omnibus (26) des données, INITIALIS, ECRITURE, $\phi_1$, $\phi_2$, INTERRUPT pour les lignes de l'omnibus (29) de contrôle.

Seul le circuit intégré (60) est représenté en détail sur cette figure. La partie centrale est le réseau (102) des cellules de mémorisation. La cellule à atteindre pour la lecture ou l'écriture, est adressée d'une part par le décodeur (100) de colonne et d'autre part par le décodeur (101)à de ligne. Le décodeur (100) de colonne est alimenté par les fils $A_0$, $A_1$, $A_2$, $A_3$, $A_4$ de l'omnibus (23) des adresses. Le décodeur (101) de ligne est alimenté par les fils $A_5$ à $A_{15}$ de l'omnibus (23) des adresses. En (107) est représentée l'horloge interne ce de circuit intégré (60). Cette horloge (107) interne reçoit sur son entrée (1) le signal d'initialisation "INITIALISAT", sur son entrée (2) le signal "ECRITURE" et sur son entrée (3) le signal d'horloge "$\phi_2$". Les sorties de cette horloge (107) interne sont : en (4) le signal d'horloge "$\phi_1$" et en (6) le signal d'horloge "$\phi_3$". Ces trois signaux d'horloge "$\phi_1$", "$\phi_2$" et "$\phi_3$" viennent alimenter le réseau (102) des cellules de mémorisation pour contrôler les phases de fonctionnement de ces dites cellules de mémorisation. En (103) sont représentés les circuits d'entrée-sortie de données de la mémoire. Ces circuits (103) d'entrée-sortie reçoivent sur leur entrée (1) la valeur du bit à enregistrement dans le cas d'un cycle écriture ou la valeur du bit à enregistrer dans le cas d'un cycle de rafraichissement. La sortie (2) du circuit (103) d'entrée-sortie transmet la valeur du bit lu à l'emplacement sélectionné par l'adresse dans le cas d'un cycle de lecture dans le cas d'un cycle de rafraîchissement. La borne (3) du circuit (105) est reliée au réseau (102) des cellules de mémorisation. Dans le cas d'un cycle d'écriture ou d'un cycle de rafraîchissement, cette borne (3) du circuit (103) d'entrée-sortie enverra vers le réseau (102) des cellules de mémorisation la valeur du bit à enregistrer ou à réenregistrer. Dans le cas d'un cycle de lecture cette borne (3) recevra du réseau (102) des cellules de mémorisation la valeur du bit contenu dans la cellule sélectionnée par les décodeurs (100) et (101). La borne (1) du circuit (103) d'entrée-sortie est alimentée par la sortie (4) du conditionneur (109). Ce conditionneur (109) reçoit sur sa borne (1) le signal d'horloge "$\phi_3$" issu de l'horloge (107) interne, sur sa borne (2) un signal émis par la sortie (3) du circuit (108) OU-EXCLUSIF et sur sa borne (3) un signal de sélection émis par le contrôleur (69) d'écriture des qualificateurs. Le circuit (108) OU-EXCLUSIF reçoit sur son entrée (1) la valeur du bit à emmagasiner, dans le cas d'une écriture, émis par le contrôleur (69) d'écriture des qualificateurs. La borne (2) du circuit (103) d'entrée-sortie alimente l'entrée du circuit (104) OU-EXCLUSIF. Ce circuit (104) OU-EXCLUSIF reçoit sur son entrée (2) un signal émis par l'horloge (107) interne. La sortie (3) de ce circuit (104) alimente l'entrée (1) de l'amplificateur (105) contrôlé. Cet amplificateur (105) contrôlé reçoit sur son entrée (2) de contrôle un signal émis par le conditionneur (123) et sa sortie (3) envoie, dans le cas d'un cycle lecture, la valeur du bit lu vers le contrôleur (69) d'écriture des qualificateurs. Le conditionneur (123) reçoit sur son entrée (1) le signal d'horloge $\phi_2$ et sur

son entrée (2) un signal de sélection émis par le contrôleur (69) d'écriture des qualificateurs.

Comme il a été dit auparavant, le circuit intégré (70) référencé MOTOROLA 6820 est prévu par le constructeur pour le raccordement de 2 périphériques aux omnibus (23), (26) et (29). Dans le mode de réalisation décrit dans cet exemple, il n'est utilisé qu'une seule de ces possibilités de raccordement. Dans les figures ne sont représentés que les ensembles fonctionnels mis en cause par l'invention. Ces ensembles sont au nombre de 5. Un bloc (135) de contrôle de fonction, un registre (136) tampon amont, un bloc (137) de contrôle des interruptions, un bloc (138) de contrôle de transfert et un registre (139) tampon aval. Une liaison (146) multiple relie la borne (5) du bloc (135) de contrôle de fonction et la borne (3) multiple du bloc (138) de contrôle de transfert. Un omnibus (147) relie la borne (2) multiple du registre (136) tampon amont et la borne (1) multiple du bloc (138) de contrôle du transfert. Un omnibus (151) relie la borne (4) multiple du bloc (138) de contrôle du transfert et la borne (2) multiple du registre (139) tampon aval. Une liaison (149) multifilaire relie la borne (2) multifilaire du bloc (138) de contrôle de transfert et la borne (3) multifilaire du bloc (137) de contrôle des interruptions. Le bloc (135) de contrôle de transfert comporte en outre 4 bornes dont 1 borne multiple. Sur la borne (1) arrive la ligne d'initialisation INITIALISAT. Sur la borne (2) arrive la ligne de distribution d'horloge $\phi_2$. Sur la borne (3) arrive la ligne de commande d'écriture ECRITURE. Sur la borne (4) multifilaire arrivent 4 lignes de l'omnibus (23) d'adresses $A_0$, $A_1$, $A_{11}$, $A_{15}$ et une ligne de validation SELECTION. Le registre (136) tampon amont reçoit sur sa borne (1) multifilaire 8 lignes $D_0$, ..., $D_7$ en amont de l'omnibus (26) des données. Le bloc (137) de contrôle des interruptions reçoit sur sa borne (1) une ligne de demande d'interruption INTERRUPT, sur sa borne (2) une ligne (131) reliée à l'entrée (+) de bistable (124) de l'unificateur (69) d'écriture et sur sa borne (3) une liaison (150) reliée à la sortie (2) du mélangeur (153) de l'unificateur d'écriture. Le registre (139) tampon reçoit sur sa borne (1) multifilaire un omnibus (152) relié à la borne (1) du mélangeur (153) et aux bornes (2) des différents conditionneurs (182 à 189) suivant une répartition qui sera définie ci-après.

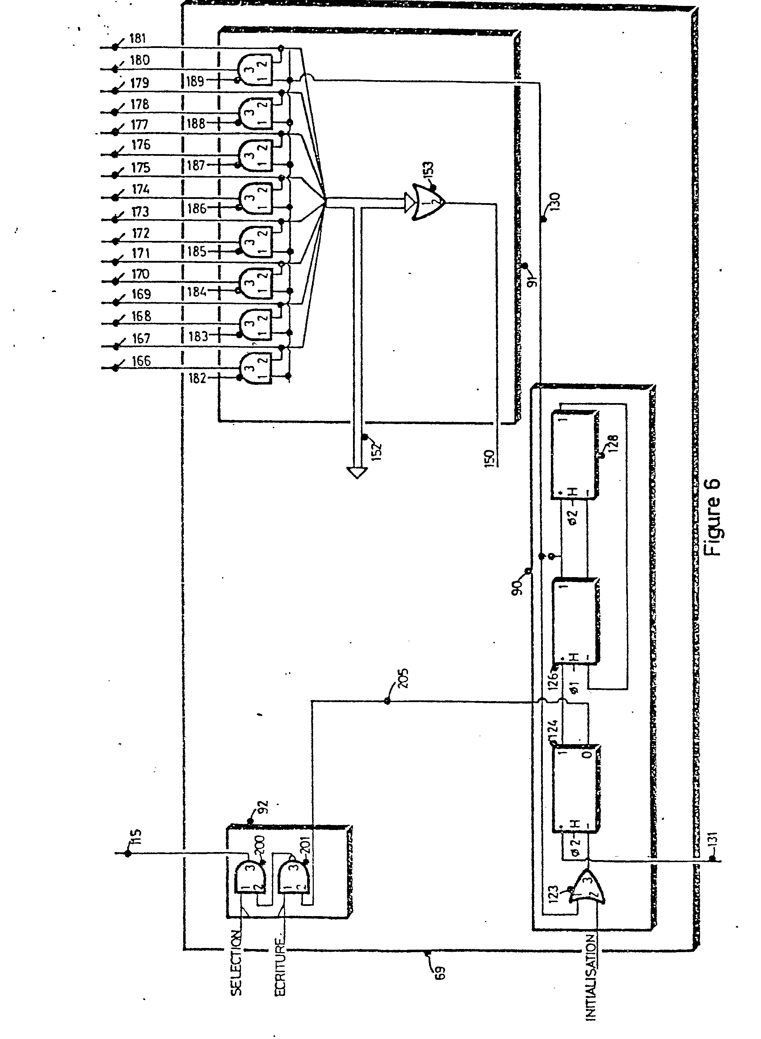

L'unificateur (69) d'écriture est également représenté sur la figure 6. Sur cette figure les circuits de l'unificateur sont regroupés suivant leur fonction. Le bloc (90) est le bloc de contrôle de l'unicité d'écriture, le bloc (91) est le bloc de contrôle des échanges entre la mémoire (25) des qualificateurs et l'adaptateur (70) d'interface, et le bloc (92) est le bloc de contrôle des opérations d'écriture dans la mémoire (25) des qualificateurs. Sur la figure les bistables sont représentés avec la convention suivante : les deux entrées de signaux sont indiquées par les signes (+) et (-) et les sorties par les signes (1) et (0). Le bistable comporte une entrée horloge indiquée par la lettre (H).

Le bloc (90) de contrôle de l'unicité d'écriture comprend le mélangeur (123), le bistable (124), le bistable (126) et le bistable (128). La borne (1) du mélangeur (123) reçoit la ligne (130) en amont de la sortie (1) du bistable (126) et la borne (2) reçoit la ligne d'initialisation INITIALIS en amont de l'omnibus (29) de contrôle. La sortie (3) du mélangeur (123) est reliée à l'entrée (-) du bistable (124). L'entrée (+) du bistable (124) est reliée à la liaison (131). La sortie (1) du bistable (124) est reliée à l'entrée (+) du bistable (126). La sortie (0) du bistable (124) alimente la ligne (205) qui aboutit sur l'entrée (1) des conditionneurs (201) des circuits (60 à 67) intégrés de la mémoire (25) des qualificateurs. L'entrée (-) du bistable (126) est reliée à la sortie (1) du bistable (128). La sortie (1) du bistable (126) est reliée à l'entrée (+) du bistable (128) et la sortie (0) du bistable (126) est reliée à l'entrée (-) du bistable (128). Les bistables (124) et (128) reçoivent sur leur entrée H le signal d'horloge $0_2$ et le bistable (126) reçoit sur son entrée H le signal d'horloge $\phi_1$.

Le bloc (92) de contrôle des opérations d'écriture est composé d'un conditionneur (200) et d'un conditionneur (201) à sortie inversée. Le conditionneur (201) à sortie inversée reçoit sur son entrée (1) la ligne de commande d'écriture "ECRITURE" et sur son entrée (2) la ligne (205) qui émane de la sortie (0) du bistable (124). La sortie de ce conditionneur est reliée à l'entrée (2) du conditionneur (200) qui reçoit sur son entrée (1) la ligne de validation SELECTION. La sortie (3) de ce conditionneur alimente la ligne (115) qui aboutit sur l'entrée (3) du conditionneur (109).

Le bloc (91) de contrôle des échanges comprend un mélangeur (153) et huit conditionneurs (182 à 189). L'omnibus (152) qui émane du registre (139) tampon aval est raccordé au mélangeur (153) et aux conditionneurs (182 à 189) de la façon suivante : l'omnibus (152) comprend 8 lignes correspondant à travers l'adaptateur (70) d'interface aux 8 lignes de l'omnibus (26) de données. La borne (1) du mélangeur (153) comprend 8 entrées raccordées chacune à une ligne différente de l'omnibus (142). En ce qui concerne les conditionneurs (182 à 189) l'entrée (2) de chaque conditionneur est raccordée à une ligne différente : le conditionneur (182) à la ligne correspondant à $D_0$, ... le conditionneur (189) à la ligne correspndant à $D_7$. Chacune des lignes est prolongée respectivement vers le circuit intégré correspondant au bit concerné : la ligne (167) vers le circuit (60), la ligne (169) vers le circuit (61), la ligne (171) vers le circuit (62), la ligne (173) vers le circuit (63), la ligne (175) vers le circuit (63), la ligne (175) vers le circuit (64), la ligne (177) vers le circuit (65), la ligne (179) vers le circuit (66) et la ligne (181) vers le circuit (67). Les sorties (3) des conditionneurs (182 à 189) sont raccordées respectivement au circuit intégré correspndant au bit concerné : la ligne (166) au circuit (60), la ligne (168) au circuit (61), la ligne (170) au circuit (62), la ligne (172) au circuit (63), la ligne (174) au circuit (64), la ligne (176) au circuit (65), la ligne (178) au circuit (66) et la ligne (180) au circuit (67).

Dans la description du fonctionnement des circuits, il ne sera pas donné d'explication détaillée du fonctionnement des circuits intégrés (60, 61, 62, 63, 64, 65, 66, 67, 70). Celui-ci est décrit en détail dans les différentes documentations fournies par le constructeur MOTOROLA. Les explications qui vont suivre sont limitées à l'explication du fonctionnement des circuits spécifiques à l'invention.

Il est à noter que pour des raisons technologiques la documentation MOTOROLA utilise quelquefois les signaux inversés que l'on appelle signaux inverses par opposition aux signaux directs. C'est le cas par exemple, pour le signal d'initialisation qui est signal RESET. Pour la clarté de l'exposé et pour simplifier les explication, il ne sera considéré dans ce qui suit que les valeurs directes des signaux étant bien entendu que dans le fonctionnement réel, c'est la valeur appropriée qui est utilisée. Par exemple, dans les explications qui vont suivre, on dit que l'initialisation est faite par un signal INITIALISATION qui est un signal direct.

L'initialisation du contrôleur (69) d'unification d'écriture se fait en appliquant un signal INITIALIS sur l'entrée (2) du mélangeur (123). Ce signal traverse le mélangeur (123) pour entrer par la borne (-) du bistable (124) qui est synchronisé par le signal d'horloge $\phi_2$. Le bistable (124) va donc voir sa sortie (1) basculer à zéro sur le front descendant du signal d'horloge $\phi_2$. L'initialisation n'a aucun effet sur les bistables (126) et (128) car ces deux bistables s'initialisent mutuellement.

En effet, si la sortie (7) du bistable (126) est haute, cela suppose que la sortie (1) du bistable est reliée à l'entrée (-) du bistable (126). Donc si la sortie (1) du bistable (126) est un niveau haut, ce niveau est transmis à l'entrée (+) du bistable (128). Ceci provoque le basculement à un niveau bas de la sortie (1) du bistable (126). L'initialisation est réalisée

C017584

- 28 -

automatiquement.

Dans un premier temps, il est examiné le fonctionnement de l'invention dans le cas de l'écriture d'un qualificateur dans la mémoire (25) des qualificateurs.

Quand le microprocesseur (48) veut charger un qualificateur dans la mémoire (25) des qualificateurs, il doit procéder à deux opérations. D'abord, il doit charger le qualificateur dans le circuit (70) d'adaptation d'interface. Ensuite, il doit commander un cycle écriture à la mémoire (24) des données. Ce cycle écriture doit être effectué à l'adresse contenant les données à qualifier. L'exécution de ce cycle d'écriture dans la mémoire (24) des données entraîne l'exécution en parallèle d'un cycle d'écriture dans la mémoire (25) des qualificateurs. Au cours de ce cycle d'écriture parallèle, le qualificateur qui se trouvait stocké dans le circuit (70) d'adaptation d'interface est emmagasiné dans l'adresse associée de la mémoire (25) des qualificateurs.

Pour charger le qualificateur dans le circuit (70) d'adaptation d'interface, le microprocesseur (48) effectue les opérations suivantes :

. Il place l'adresse du circuit (70) d'adaptation d'interface sur l'omnibus d'adresse. Pour un circuit (70) d'adaptation d'interface du type MOTOROLA MC 6820 (0980) cette adresse est définie par les lignes $A_0$, $A_1$, $A_{11}$ et $A_{15}$ qui sont raccordées respectivement aux bornes $RS_0$, $RS_1$, $CS_0$, $CS_2$ du circuit (70) d'adaptation d'interface.
. Il place sur l'omnibus (26) des données la configuration de le qualificateur à charger à l'adresse associée : le bit 0 sur la ligne $D_0$, .... le bit 7 sur la ligne $D_7$.

. Il place dans l'omnibus (29) de contrôle :

. un signal de commande de cycle écriture sur la ligne référencée ECRITURE. Quand cette ligne est portée à une tension positive cela signifie que le processeur (48) demande un cycle écriture, si cette ligne est portée à une tension nulle c'est un cycle lecture qui est demandé.

. un signal de validation sur la ligne référencée SELECTION. Ce signal autorise le transfert de l'adresse dans le circuit (70) d'adaptation d'interface.

. un signal d'horloge $\phi_2$ pour synchroniser le fonctionnement du circuit (70) d'adaptation d'interface.

Le bloc (135) de contrôle de fonction ayant reconnu son adresse sur sa borne (4) multiple et recevant sur sa borne (3) un ordre d'écriture, place sur sa borne (5) multiple les commandes à transmettre au bloc (138) de contrôle de transfert. Ces commandes sont transmises à travers la liaison (146) multifilaire jusqu'à la borne (3) du bloc (138) de contrôle de transfert. En réponse à ces commandes, le bloc (138) de contrôle de transfert organise les circuits internes du circuit (70) d'adaptation d'interface pour que le contenu du registre (136) tampon amont soit transmis au registre (139) tampon aval à travers la liaison (147) multifilaire, puis à travers le bloc (138) de contrôle de transfert et enfin à travers la liaison (151) multifilaire. De la sorte, la configuration du qualificateur $D_0$ à $D_7$ qui a été placée sur l'omnibus (26) des données se trouve contenue dans le registre

- 30 -

(139) tampon aval. Ce registre (139) tampon aval transmet sur sa borne (1) multiple et de là, à travers la liaison (152) multifilaire, la configuration $D_0$ à $D_7$ du qualificateur vers le contrôleur (69) d'unification d'écriture. Par ailleurs, le bloc (138) de contrôle du transfert informe le bloc (137) de contrôle des interrupteurs de la bonne exécution du transfert du qualificateur dans le registre (139) tampon aval. Pour cela le bloc (138) de contrôle du transfert place un signal de bonne exécution du transfert sur sa borne (2), ce signal à travers la liaison (149) entre dans la borne (3) du bloc (137) de contrôle des interruptions. En réponse à ce signal le bloc (137) de contrôle des interruptions transmet, à partir de sa borne (2) et à travers la liaison (131), au contrôleur (69) d'unification d'écriture un signal informant ce dernier que la configuration du qualificateur se trouve disponible sur la liaison (152). En résumé, le circuit (70) d'adaptation d'interface a placé la configuration du qualificateur sur la liaison (152) et en a informé par la liaison (131) le contrôleur (69) d'unification d'écriture.

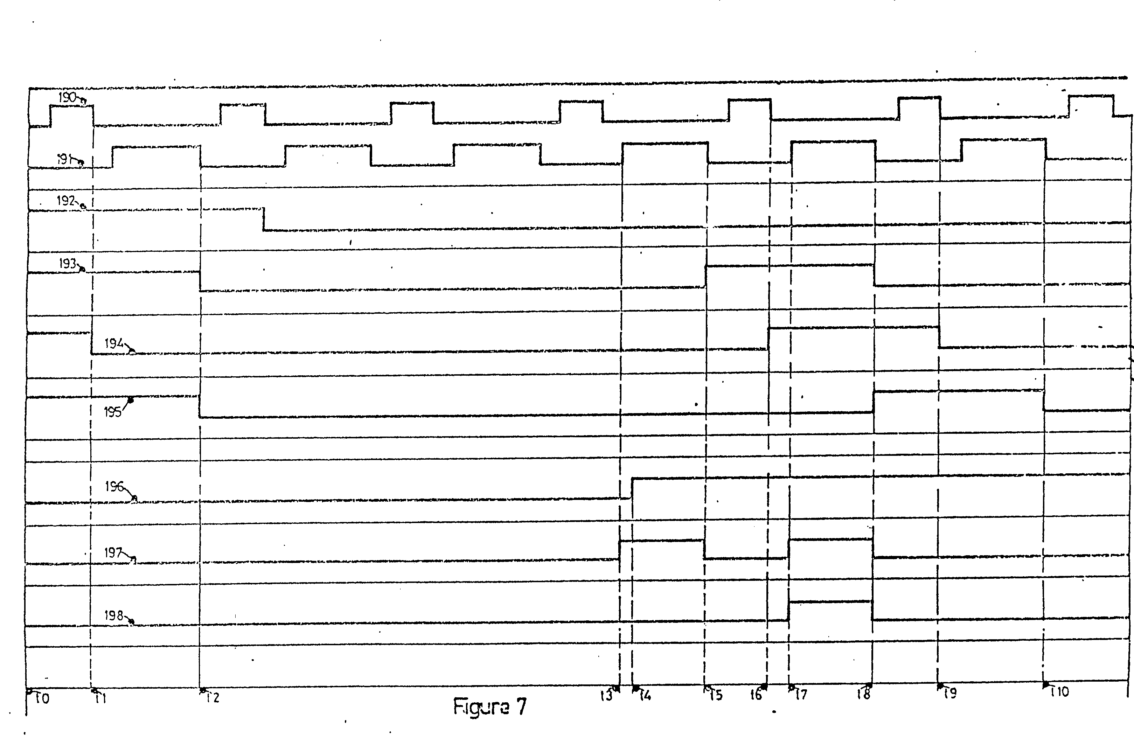

Le microprocesseur (48) au cours de l'opération précédente a transmis à l'adaptateur (70) d'interface la configuration du qualificateur à emmagasiner dans la mémoire (25) des qualificateurs. Dès que ce transfert est effectué il a été vu que le bloc (137) de contrôle des interruptions en informe le contrôleur (69) d'unification d'écriture en envoyant un signal sur la liaison (131) qui arrive sur la borne (+) du bistable (124) qui se trouve dans le bloc (90) de contrôle de l'unicité d'écriture. Sous l'action de cette sollicitation, le bistable (124) bascule et sa sortie (1) passe à un niveau haut sur le front descendant du signal d'horloge $\phi_2$. Ce niveau haut signifie pour le bloc (90) de contrôle d'unicité d'écriture que la configuration du qualificateur est disponible à la sortie du circuit (70) d'adaptation d'interface sur l'omnibus (152). La sortie (1) du bistable (124) est reliée à l'entrée (+) du bistable (126) : le bistable (126) bascule donc et sa sortie (1) va passer à un niveau haut sur le front descendant de l'horloge $\phi_1$. La sortie (1) du bistable (126) est reliée à la ligne (130). Cette ligne (130) quand elle est haute autorise le passage de la configuration contenue dans l'omnibus (152) à travers la série des conditionneurs (182, 183, 184, 185, 186, 187, 188, 189) qui contrôlent le passage vers les lignes (166, 168, 170, 172, 174, 176, 178, 180) d'entrée des bits dans les circuits (60, 61, 62, 63, 64, 65, 66, 67). Les conditionneurs (182, ...:.., 189) restent donc ouverts pendant tout le temps où la sortie (1) de bistable (126) est à un niveau haut. C'est le temps qui est mis à profit par le microprocesseur pour demander un cycle écriture dans la mémoire (24) des données et dans la mémoire (25) des qualificateurs. Ce cycle nous le verrons plus loin, est contrôlé par le bloc (92) de contrôle des opérations d'écriture. Le bistable (128) a son entrée (+) reliée à la sortie (1) du bistable (126) : le passage à un niveau haut de cette sortie fait basculer le bistable (128) dont la sortie (1) passe à un niveau haut sur le front descendant du signal d'horloge $\phi_2$. Cette sortie haute signifie qu'il peut être procédé à l'écriture de la configuration du qualificateur. La sortie (1) de bistable (128) entre dans l'entrée (-) du bistable (126) dont la sortie (1) passe à un niveau bas sur le front descendant du signal d'horloge $\phi_1$. La sortie (0) du bistable (126) est passée à un niveau haut et transmet ce niveau à l'entrée (-) du bistable (128) qui bascule : sa sortie (1) passe à un niveau bas. Le bloc (90) du contrôle de l'unicité de l'écriture a été ramené à son état initial. La sortie (1) du bistable (126), qui commande la ligne (130), se trouvant à un niveau bas ferme les conditionneurs (182 à 189) du bloc (91) de contrôle des échanges entre la mémoire (25) des qualificateurs et le circuit (70) d'adaptation d'interface. La fermeture de ces conditionneurs isole donc la mémoire (25) des qualificateurs du circuit (70) d'adaptation d'interface. Les conditionneurs n'ont été ouverts que pendant la durée d'un cycle écriture comme cela apparaîtra clairement sur la figure 7 qui illustre le chronogramme des signaux mis en cause pendant un cycle d'écriture en mémoire (25) des qualificateurs.

Le bloc (92) de contrôle des opérations d'écriture reçoit du bloc (90) de contrôle de l'unicité d'écriture une ligne (205) qui émane de la borne (0) du bistable (124) et qui aboutit sur l'entrée (2) du conditionneur (201) à sortie inversée. Quand la sortie (1) du bistable (124) est à une valeur basse, ce qui signifie qu'il n'y a pas de configuration de qualificateur disponible dans le circuit (70) adaptateur d'interface, la sortie (0) de ce bistable est à une valeur haute. Dans ces conditions, l'entrée (2) du conditionneur (201) reçoit un signal positif. Si une commande d'écriture ECRITURE est envoyée par le microprocesseur (48) sur l'entrée (1) du conditionneur (201), la sortie (3) de celui-ci est basse puisque les 2 conditions d'entrée sont satisfaites. La sortie (3) du conditionneur (201) retransmet le niveau bas à l'entrée (2) du conditionneur (200) qui par conséquent se trouve fermé. Le conditionneur (200) étant fermé le signal de validation SELECTION n'est pas transmis à la sortie (3) de ce conditionneur et donc n'est pas transmis sur la ligne (115) qui commande les conditionneurs (109) et (123) de la mémoire (25) des qualificateurs. Comme il est expliqué dans les documents MOTOROLA concernant les circuits MCM 6605A, l'absence du signal SELECTION en présence d'une commande ECRITURE provoque l'exécution d'un cycle de rafraîchissement du contenu de l'adresse appelée. On voit donc que l'appel d'un cycle écriture en l'absence d'une configuration de qualificateur dans le circuit (70) d'adaptation d'interface provoque un cycle de rafraîchissement : il n'y a pas altération du contenu de la mémoire (25) des qualificateurs, bien au contraire, il y a restauration du niveau des signaux emmagasinés.

Dans le cas où le bloc (92) de contrôle des opérations d'écriture reçoit sur la ligne (205) un signal de niveau bas ce qui signifie qu'une configuration de qualificateur se trouve disponible à la sortie du circuit (70) d'adaptation d'interface, la sortie (3) du conditionneur (201) est une valeur haute puisque son entrée (2) est à une valeur basse. Le conditionneur (200) est donc ouvert et le signal de validation SELECTION le traverse pour alimenter la ligne (115). La ligne (115) étant à un niveau haut, la mémoire (25) des qualificateurs peut exécuter un cycle d'écriture normal.

Dans le cas où le bloc (92) de contrôle des opérations d'écriture reçoit sur la borne (1) du conditionneur (201) un signal à niveau bas, ce qui signifie qu'il s'agit d'un cycle de lecture, la sortie (3) du conditionneur (201) se trouve portée à un niveau haut. Comme précédemment, le conditionneur (200) sera ouvert et la mémoire (25) des qualificateurs peut exécuter un cycle de lecture puisque le signal de validation SELECTION peut porter la ligne (115) à un niveau haut.

Le bloc (91) de contrôle des échanges entre la mémoire (25) des qualificateurs et le circuit (70) d'adaptation d'interface contrôle ces échanges aussi bien dans le cas de l'écriture que dans celui de la lecture.

Dans le cas de la fonction écriture, il a été vu que le circuit (70) d'adaptation d'interface place la configuration du qualificateur à mémoriser sur l'omnibus (152) qui est raccordé ligne par ligne aux conditionneurs (182 à 189) : la ligne correspondant au bit 0 du qualificateur arrive sur l'entrée (1) du conditionneur (182) et ainsi de suite jusqu'à la ligne correspondant au bit 7 qui arrive sur l'entrée (1) du conditionneur (189). Les conditionneurs (182 à 189) sont contrôlés par leurs entrées (2) qui sont raccordés à la ligne (130). Il a été vu que cette ligne (130) est à un niveau haut pendant la durée d'un cycle écriture sous réserve qu'une configuration de qualification soit disponible sur l'omnibus (152). Si cette condition est acquise la ligne (130) se trouve à un niveau haut et le contenu des lignes sera transmis au circuit (60 à 67) intégré qui lui correspond à partir des sorties (3) des conditionneurs (182 à 189) et à travers les lignes (166, 168, 170, 172, 174, 176, 178, 180).

Si la configuration du qualificateur n'est pas disponible à la sortie du circuit (70) d'adaptateur d'interface, la ligne (130) sera portée à un niveau bas, les conditionneurs (181 à 189) seront fermés; la communication entre le circuit (70) d'adaptation d'interface et la mémoire (25) des qualificateurs est coupée.

Dans le cas d'un cycle de lecture, la mémoire (25) des qualificateurs place les bits lus par les circuits (60 à 69) intégrés sur les lignes (167, 169, 171, 173, 175, 177, 179, 181), le bit 0 sur la ligne 167 ainsi de suite jusqu'au bit 7 sur la ligne (181). Ces lignes arrivent directement d'une part sur l'omnibus (152) place la configuration lue dans la mémoire (25) des qualificateurs à la borne (1) multiple du registre (139) tampon aval. Le mélangeur (153) place sur sa borne (2) un signal à niveau haut si au moins un des signaux placé à son entrée a un niveau haut. Ce signal est transmis par la ligne (150) à la borne (4) du bloc (137). Ce bloc (137) engendre un signal à niveau haut sur sa borne (1) qui est raccordée à la ligne de demande d'interruption INTERRUPT. De la sorte, le microprocesseur (48) est informé de la présence d'une configuration de qualificateur disponible à l'entrée du circuit (70) d'adaptation d'interface.

Dans le cas où toutes les lignes raccordées à l'entrée (1) du mélangeur (153) sont à niveau bas, cela signifie qu'il n'y a pas de qualificateur à l'adresse associée à l'adresse lue, la sortie (2) du mélangeur reste à un niveau bas et il n'y a pas de demande d'interruption.

La figure 7 représente le chronogramme des principaux signaux électriques mis en oeuvre dans les circuits précédents au cours de l'écriture d'un qualificateur en mémoire (25) des qualificateurs.

Les signaux représentés sont :

- en (190) le signal d'horloge $\phi_1$,
- en (191) le signal d'horloge $\phi_2$,
- en (192) le signal d'initialisation INITIALIS,
- en (193) le signal à la sortie (1) du bistable (124),
- en (194) le signal à la sortie (1) du bistable (126),
- en (195) le signal à la sortie (1) du bistable (128),
- en (196) le signal véhiculé par la liaison (131),
- en (197) le signal de commande de cycle d'écriture ECRITURE,
- en (198) le signal de sélection de la mémoire SELECTION.

L'instant $t_0$ est l'instant de mise en route du système. Il a été expliqué précédemment que les bistables (126) et (128) s'auto-initialisent. Sur la figure, il a été représenté le cas où le bistable (126) et le bistable (128) ont leur sortie (1) en position haute. Le bistable (128) ayant sa sortie (1) à une valeur haute, le bistable (126) va basculer et sa sortie (1) va passer à une valeur basse à l'instant $t_1$ sur le signal (194). Ensuite, le bistable (126) étant initialisé sa sortie (0) va faire basculer le bistable (128) dont la sortie (1) va passer à une valeur basse sur le front descendant du signal d'horloge $\phi_2$ : c'est ce qui se passe à l'instant $t_2$ sur le signal (195).

Le signal d'initialisation INITIALIS étant appliqué à l'entrée (-) du bistable (124) ce bistable bascule et sa sortie (1) passe à une valeur basse sur le front descendant du signal d'horloge $\phi_2$ : c'est ce qui se passe à l'instant $t_2$ sur le signal (193). Après ce temps $t_2$ les circuits du contrôleur (69) d'unification d'écriture sont initialisés et le signal d'initialisation peut cesser.

A l'instant $t_3$ le microprocesseur (48) demande un cycle d'écriture dans le circuit (70) adaptateur d'interface pour y charger la configuration d'un qualificateur. Pour cela, il envoie un signal (197) de commande d'écriture ECRITURE. Sous cette commande la configuration du qualificateur est transférée de l'omnibus (26) des données dans le circuit (70) adaptateur d'interface. Quand ce transfert est effectué le circuit (70) adaptateur d'interface envoie sur la liaison (131) un signal (196) pour informer le contrôleur (69) d'unification de cycle de la disponibilité de cette configuration sur l'omnibus (152) : c'est ce qui se passe à l'instant $t_4$ sur le signal (196).

Ce signal (196) est appliqué à l'entrée (+) du bistable (124) qui bascule sur le front descendant du signal d'horloge $\phi_2$ : c'est ce qui se passe à l'instant $t_5$ sur le signal (193). La sortie (7) du bistable (124) étant à une valeur haute fait basculer le bistable (126) sur le front descendant du signal d'horloge $\phi_1$ : c'est ce qui se passe à l'instant $t_6$ sur le signal (194).

Ce signal (194) haut signifie que l'écriture du qualificateur en mémoire (25) des qualificateurs est possible. Le microprocesseur (48) commande de l'exécution d'un cycle d'écriture en mémoire (25) des qualificateurs en plaçant sur le signal (197) une impulsion ECRITURE située entre $t_7$ et $t_8$. Pendant le même intervalle de temps, le microprocesseur (48) valide le cycle écriture en mémoire (25) des

- 38 -

indicateurs en plaçant sur le signal (198) une impulsion SELECTION qui autorisera l'exécution du cycle écriture.

La sortie (1) du bistable (126) étant haute, celle-ci fait basculer le bistable (128) sur le front descendant du signal de l'horloge $\phi_2$, c'est ce qui se passe à l'instant $t_8$ sur le signal (195). En même temps, la sortie (1) du bistable (126) alimente la liaison (130) qui d'une part alimente le bloc (91) de contrôle des échanges et d'autre part alimente l'entrée (-) du bistable (124) qui bascule sur le front descendant du signal d'horloge $\phi_2$ : c'est ce qui se passe à l'instant $t_8$ sur le signal (193). La sortie (1) du bistable (124) est devenue basse.

La sortie (1) du bistable (128) étant haute va faire basculer le bistable (126) sur le front descendant du signal d'horloge $\phi_1$, c'est ce qui se passe à l'instant $t_9$ sur le signal (194). Le basculement de ce bistable fait passer à un niveau bas le signal (194) qui est véhiculé par la liaison (130) et qui commande la communication entre le circuit (70) adapteur d'interface et la mémoire (25) des qualificateurs , le niveau bas signifie que la communication est coupée.

La sortie (0) du bistable (126) étant devenue haute, celle-ci fait basculer le bistable (128) dont la sortie (1) passe à un niveau bas sur le front descendant du signal d'horloge $\phi_2$ : c'est ce qui se produit à l'instant $t_{10}$ sur le signal (195). Le contrôleur (69) d'unification d'écriture est revenue à l'état où il se trouvait avant l'instant et il est prêt à satisfaire

- 39 -

une nouvelle demande de cycle d'écriture d'un qualificateur dans la mémoire (25) des qualificateurs.

0017584

- 1 -

REVENDICATIONS

1. Procédé d'exploitation par des moyens utilisateurs, des données contenues dans une mémoire adressable du type consistant à associer des qualificateurs auxdites données contenues dans ladite mémoire adressable et à utiliser ladite mémoire adressable en appelant lesdites données caractérisée en ce que ladite qualification associée aux données comprend l'écriture de qualificateurs dans des moyens de qualification associés aux dites données, lesdits qualificateurs provenant desdits moyens utilisateurs et en ce que ladite utilisation de ladite mémoire adressable comprend la commande desdits moyens de qualification, à chaque fois qu'une donnée est appelée pour engendrer une information relative audit qualificateur associée à ladite donnée appelée et pour transmettre cette dite information auxdits moyens utilisateurs.

2. Procédé selon la revendication 1 caractérisé en ce que lesdits qualificateurs ont des configurations différentes, lesquelles dites configurations différentes sont définies par les moyens utilisateurs.

3. Procédé selon l'une des revendications 1 ou 2 caractérisé en ce que la qualification précitée comporte une étape intermédiaire avant ladite écriture dans lesdits moyens de qualification dans cette dite étape intermédiaire lesdits moyens utilisateurs transmettent ledit qualificateur à des moyens intermédiaires qui à leur tour transmettent ledit qualificateur pour écriture dans lesdits moyens de qualification et ladite utilisation de ladite mémoire adressable comporte la stimulation des moyens intermédiaires pour la transmission auxdits moyens utilisateurs de ladite information relative audit qualificateur.

4. Procédé selon l'une des revendications précédentes caractérisé en ce que ladite transmission de ladite information relative audit qualificateur comprend une première phase de signalisation aux moyens utilisateurs de la présence de qualificateur dans lesdits moyens de qualification et une deuxième phase dans laquelle, ledit qualificateur est transmis à son tour à la demande desdits moyens utilisateurs qui ont été alertés au cours de ladite première phase.

5. Système d'exploitation de données pour l'exécution du procédé selon l'une des revendications précédentes du type comprenant :

. au moins une mémoire des données adressables pour emmagasiner des données,

. des moyens utilisateurs de données pour exploiter lesdites données, ces dits moyens utilisateurs comprenant :

. des circuits de traitement pour traiter lesdites données

. des circuits d'adressage pour adresser les emplacements d'emmagasinage desdites données dans ladite mémoire des données sur commande desdits circuits de traitement

. un registre tampon d'entrée/sortie relié auxdits circuits de traitement pour contenir lesdites données faisant l'objet d'un échange entre lesdits circuits de traitement et ladite mémoire adressable.

. ledit système de données comporte en outre des moyens de liaison comprenant :

. un omnibus d'adresse pur raccorder lesdits circuits d'adressage avec ladite mémoire des données

. un omnibus de données pour raccorder ledit registre tampon d'entrée-sortie avec ladite mémoire des données

. un omnibus de contrôle pour contrôler lesdits échanges de donnéesentre lesdits circuits de traitement et ladite mémoire adressable.

Ce système d'exploitation est caractérisé en ce qu'il comporte des moyens de qualification desdites données contenues dans ladite mémoire des données pour qualifier lesdites données sur instruction desdits moyens de traitement par écriture d'un qualificateur dans des emplacements associés aux adresses contenant lesdites données, lesquels emplacements associés répondent aux appels desdites adresses par lesdits circuits de traitement par l'envoi d'informations relatives auxdits qualificateurs vers lesdits circuits de traitement.

6. Système d'exploitation de données selon la revendication 5 caractérisé en ce qu'il comporte des moyens intermédiaires placés entre lesdits circuits de traitement et lesdits moyens de qualification pour contrôler les échanges desdites informations relatives auxdits qualificateurs entre lesdits circuits de traitement et lesdits moyens de qualification pour permettre auxdits circuits de traitement de différer l'exploitation desdits qualificateurs.

7. Système d'exploitation selon l'une des revendicatins 5 ou 6 caractérisé en ce que lesdits moyens intermédiaires disposent d'un moyen de contrôle pour faire connaître auxdits circuits de traitement qu'ils

0017584

viennent de faire appel à une desdites données comportant un qualificatif associé.

8. Système d'exploitation selon l'une des revendications 5 à 7 caractérisé en ce que lesdits emplacements associés sont contenus dans une mémoire des qualificateurs qui est une mémoire analogue à ladite mémoire des données dont l'adressage est assuré par lesdits circuits d'adressage desdits moyens d'utilisation.

9. Système d'exploitation selon l'une des revendications 6 à 8 caractérisé en ce que ledit dispositif intermédiaire est constitué d'un dispositif de type utilisé pour raccorder lesdits moyens de traitement avec des dispositifs périphériques avec lesquels ils échangent des données.

10. Plaquettes de circuits intégrés, modules ou analogues d'un système logique suivant l'une des revendications 5 à 9.

Figure 1

Figure 2

Figure 3

ADRESSE

Figure 4

Figure 5

Figure 6

Figure 7

| | Office européen des brevets | **RAPPORT DE RECHERCHE EUROPEENNE** | Numéro de la demande<br>EP 80 40 0439 |

| **DOCUMENTS CONSIDERES COMME PERTINENTS** | | | CLASSEMENT DE LA DEMANDE (Int. Cl. 3) |
|---|---|---|---|
| Catégorie | Citation du document avec indication, en cas de besoin, des parties pertinentes | Revendication concernée | |
| X | US - A - 2 843 841 (KING)<br><br>* Colonne 3, ligne 5 à colonne 4, ligne 2; colonne 13, ligne 12 à colonne 14, ligne 9; figure 1 *<br><br>-- | 1-8 | G 06 F 13/00//<br>G 06 F 11/00 |
| | GB - A - 1 254 929 (STANDARD TELEPHONES AND CABLES)<br><br>* Page 1, ligne 67 à page 2, ligne 35; figures 1,2 *<br><br>-- | 1-6,8 | |
| | | | DOMAINES TECHNIQUES RECHERCHES (Int. Cl. 3) |
| | DE - A - 2 714 314 (LICENTIA)<br><br>* Page 5, alinéa 4; page 8, alinéa 2; figure *<br><br>-- | 1,5,8, 10 | G 06 F 13/00<br>11/00 |
| P | FR - A - 2 412 107 (OPTION)<br><br>* Page 3, lignes 6-22; figure 2 *<br><br>-- | 1,2,4-6,8,10 | |
| A | IBM TECHNICAL DISCLOSURE BULLETIN, vol. 4, no. 6, avril 1959, New York, US, VAN MECHELEN: "Use of the logic bit", pages 1-2<br><br>* En entier *<br><br>-- | 1,5 | |
| | | | CATEGORIE DES DOCUMENTS CITES |
| A | US - A - 3 213 427 (SCHMITT)<br><br>* Colonne 2, lignes 4-21; colonne 21, ligne 69 - colonne 22, ligne 41; figures 1a, b,3b *<br><br>-- ./. | 1,2,5, 7 | X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons<br><br>&: membre de la même famille, document correspondant |

X Le présent rapport de recherche a été établi pour toutes les revendications

| Lieu de la recherche<br>La Haye | Date d'achèvement de la recherche<br>26-06-1980 | Examinateur<br>WEBER R. |

OEB Form 1503.1  06.78

0017584

Numéro de la demande

**Office européen des brevets**

# RAPPORT DE RECHERCHE EUROPEENNE

EP 80 40 0439

-2-

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| A | FR - A - 2 083 696 (PHILIPS)<br>* Page 1, lignes 32-40; page 5, lignes 2-31 *<br>-- | 1,2,5, 7 | |
| P | IBM TECHNICAL DISCLOSURE BULLETIN vol. 22, no. 1, juin 1979, New York, US, PARTRIDGE: "Full memory compare processor monitor circuit", pages 182-183<br>* En entier *<br>---- | 1,5 | DOMAINES TECHNIQUES RECHERCHES (Int. Cl. ³) |

OEB Form 1503.2   06.78